# EUROPEAN PATENT SPECIFICATION

(11) **EP 4 492 671 B1**
(45) Date of publication and mention of the grant of the patent: **26.08.2026**
(21) Application number: 24187371.0
(22) Date of filing: 09.07.2024
(51) Int. Cl.: H02P 1/18, H02P 6/21

(54) **START-UP DEVICE, MOTOR SYSTEM AND METHOD FOR REDUCING DC MOTOR START-UP CURRENT**
STARTVORRICHTUNG, MOTORSYSTEM UND VERFAHREN ZUR REDUZIERUNG DES STARTSTROMS EINES GLEICHSTROMMOTORS
DISPOSITIF DE DÉMARRAGE, SYSTÈME DE MOTEUR ET PROCÉDÉ DE RÉDUCTION DU COURANT DE DÉMARRAGE DE MOTEUR À COURANT CONTINU

(30) Priority: 10.07.2023 CN 202310841321
(43) Date of publication of application: 15.01.2025
(73) Proprietor: Carrier Corporation, Palm Beach Gardens, FL 33418 (US)
(72) Inventor: LIU, Jie, Shanghai 201206 (CN); TIAN, Hai, Shanghai 201206 (CN); ZHENG, Chen, Shanghai 201206 (CN)
(74) Representative: Dehns

(56) References cited:
- US-A- 4 851 743
- US-A1- 2005 194 998
- US-A1- 2007 098 373

## Description

### TECHNICAL FIELD

The present invention relates to a motor control technology, and in particular to a start-up device for a DC motor, a motor system comprising the start-up device, a method for reducing DC motor start-up current, and a computer-readable storage medium with a computer program stored thereon for implementing the method.

### BACKGROUND

The start-up current of a brushed DC motor commonly has a relatively high peak value, typically multiple times higher than rated current. This necessitates the use of high-standard and high-quality electronic components (e.g. a metal-oxide-semiconductor field-effect transistor (MOSFET), a current sampling resistor, a protecting fuse and a wire gauge etc.), leading to product costs remaining high. In addition, even if the above technical measure has been taken, it is still difficult to avoid component burning during long-term use. Therefore, reducing DC motor start-up current is an urgent problem to be solved.

US 20070098373 A1 which discloses the features of the preamble of claims 1, 5 and 6, further also discloses a direct-current (DC) motor drive unit capable of securely starting up the motor with suppressed startup current and running the motor at the speed in accord with an external speed instruction.

US 20050194998 A1 discloses a device for driving a load such as a cooling fan motor mounted on an automotive vehicle and to a method of driving such a load.

US 4851743 A discloses a speed control apparatus that is responsive to the position of a hand operated speed lever such as the "trigger" of a power drill, to control the speed of a DC motor, by pulse width modulation control of the motor current.

### SUMMARY

According to one aspect of the present invention, there is provided a start-up device for a DC motor according to claim 1.

Preferred embodiments are disclosed in claims 2 to 4.

According to yet another aspect of the present invention, there is provided a method for reducing DC motor start-up current according to claim 5.

According to still another aspect of the present invention, there is provided a computer-readable storage medium, with instructions stored thereon suitable for execution on a processor as defined in claim 6.

### BRIEF DESCRIPTION OF THE DRAWINGS

The above and/or other aspects and advantages of the present invention will become clearer and easier to understand in conjunction with the following description in various aspects of the drawings, which are provided by way of example only. The same or similar units in the drawings are represented by the same reference numerals. The drawings include:
FIG. 1 shows a schematic block diagram of a start-up device for a DC motor.
FIG. 2 shows a schematic circuit diagram of a start-up device for another DC motor.
FIG. 3 exemplarily illustrates the relationship of a start-up current over time in the circuit shown in FIG. 2 under the conventional start-up mode for a DC motor.
FIG. 4 exemplarily illustrates the relationship of a start-up current over time in the circuit shown in FIG. 2 under the DC motor start-up mode.
FIG. 5 shows a flow diagram of a method for reducing DC motor start-up current.
FIG. 6 shows a schematic block diagram of a typical control device.

### DETAILED DESCRIPTION OF EMBODIMENTS

The present invention will be more fully described hereinafter with reference to the drawings of the exemplary embodiments of the present invention. However, the present invention may be implemented in different forms, and should not be construed as being limited only by the various embodiments provided herein.

In this specification, the terms such as "comprise" and "include" indicate that in addition to the units and steps directly and explicitly stated in the specification and claims, the technical solution also does not exclude the circumstances where there are other units and steps that are not directly or explicitly stated.

In this specification, the terms such as "A and B coupled" and "A coupled to B" denote the following circumstances: i) A and B have a direct electrical or mechanical connection, etc.; ii) A and B are electrically or mechanically connected through C, etc.

Unless otherwise specified, in this specification, the terms such as "first" and "second" do not indicate the sequence of units in such aspects as time, space, size, etc., but are only used to distinguish between units.

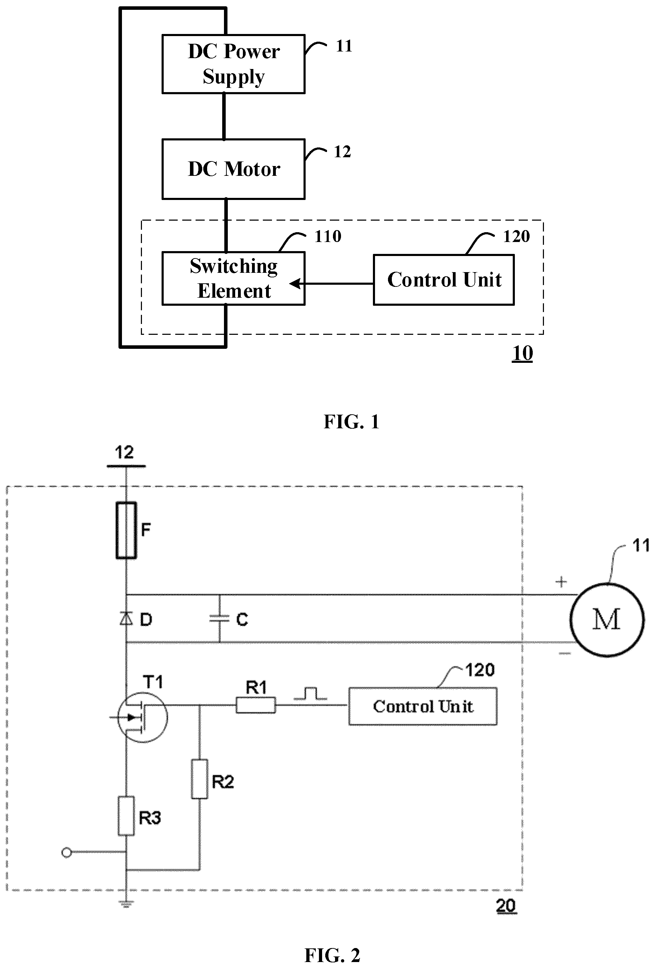

FIG. 1 shows a schematic block diagram of a start-up device for a DC motor according to some embodiments. It should be pointed out that, in addition to the units shown in FIG. 1, the start-up device further includes other units essential for implementing the start-up function. However, for the sake of conciseness, the description of FIG. 1 only involves units that are directly related to the subject of reducing start-up current.

The start-up device 10 shown in FIG. 1 includes a switching element 110 and a control unit 120. Referring to FIG. 1, the positive and negative terminals of a DC motor 11 are coupled to a DC power supply 12 and the switching element 110, respectively. It is worth mentioning that, in addition to the circumstances as illustrated, the switching element 110 may also be connected in series in other locations within a circuit L comprising the DC motor and the DC power supply 12. For instance, the switching element 110 may be located between the positive terminal of the DC motor 11 and the DC power supply 12.

On the other hand, the control unit 120 is coupled to the control terminal of the switching element 110 to control the ON-OFF state of the switching element 110. In some embodiments, the control unit 120 regulates the peak value of the start-up current (hereinafter referred to as the peak start-up current) Ip of the DC motor 11 by controlling the ON-OFF state of the switching element 110. Specifically, in a predetermined time interval Ts, the control unit 120 causes the switching element 110 to periodically switch between an ON state and an OFF state to reduce the peak start-up current lp flowing through the DC motor. The predetermined time interval Ts described herein corresponds to a start-up phase of the DC motor 11, and thus can be understood as a start-up period of the DC motor. After the start-up period is over, the control unit 120 will cause the switching element 110 to maintain the ON state.

The switching element 110 is implemented using a metal-oxide-semiconductor field-effect transistor (MOSFET) with its gate coupled to the control unit 120, one of the source S and drain D coupled to the positive or negative terminal of the DC motor 11, and the other coupled to ground.

FIG. 2 shows a schematic circuit diagram of a start-up device for a DC motor according to some other embodiments.

In the circuit 20 illustrated by FIG. 2, the switching element is implemented using an NMOS tube T1 with its gate G connected to the control unit 120 via a resistor R1 and grounded via a voltage divider resistor R2, the drain D connected to the negative terminal of the DC motor 11, and the source S grounded via a current sampling resistor R3. It should be noted that, the type of the MOS tube as illustrated herein is merely exemplary, and in some alternative implementations, a PMOS tube may also be used as the switching element 110. Furthermore, the way of connecting the MOS tube to the DC motor and other units, and the location thereof in the circuit, as illustrated in FIG. 2, are also only exemplary. Other alternative ways, for example, include, but are not limited to: the source S of the NMOS tube T1 is coupled to the negative terminal of the DC motor 11, and the drain D is grounded via the current sampling resistor R3; or the NMOS tube T1 is coupled between the DC power supply 12 and the positive terminal of the DC motor 11, wherein the source S (drain D) is coupled to the DC power supply 12, and the drain D (source S) is coupled to the positive terminal of the DC motor 11.

Continuing to refer to FIG. 2, the circuit 20 further includes an overcurrent protection component F (e.g. a protecting fuse) connected between the DC power supply 12 and the positive terminal of the DC motor 11, and a capacitor C (for absorbing electromagnetic pulse components generated by the DC motor) connected between the positive and negative terminals of the DC motor 11. The circuit 20 still further includes a diode D reversely connected between the positive and negative terminals of the DC motor 11.

In the embodiments illustrated by FIG. 2, the control unit 120 may enable the switching element (specifically illustrated by the NMOS tube T1) to periodically switch between an ON state and an OFF state by applying a pulse width modulation (PWM) signal to the gate G.

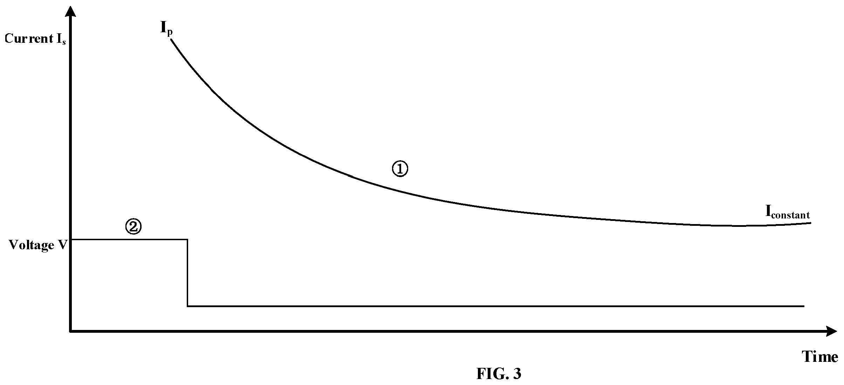

FIG. 3 exemplarily illustrates the relationship of a start-up current over time in the circuit shown in FIG. 2 under the conventional start-up mode for a DC motor, wherein the horizontal axis represents time, and the vertical axis represents the magnitude of the start-up current Is measured at the positive terminal of the DC motor and the magnitude of the voltage V measured at the negative terminal of the DC motor. In particular, in FIG. 3, ① represents a curve of variation of the start-up current Is of the DC motor 11 over time, and ② represents a curve of variation of the voltage V over time.

When the control signal applied to the gate G jumps from a low level to a high level, the circuit where the DC motor is located is rapidly switched from an ON state to an OFF state. Correspondingly, as illustrated in FIG. 3, the voltage V jumps from a high potential to a low potential, and the start-up current Iₛ is at its maximum or peak value Iₚ; thereafter, the start-up current Is gradually decreases over time until it reaches or approaches a constant current value I_{constant}.

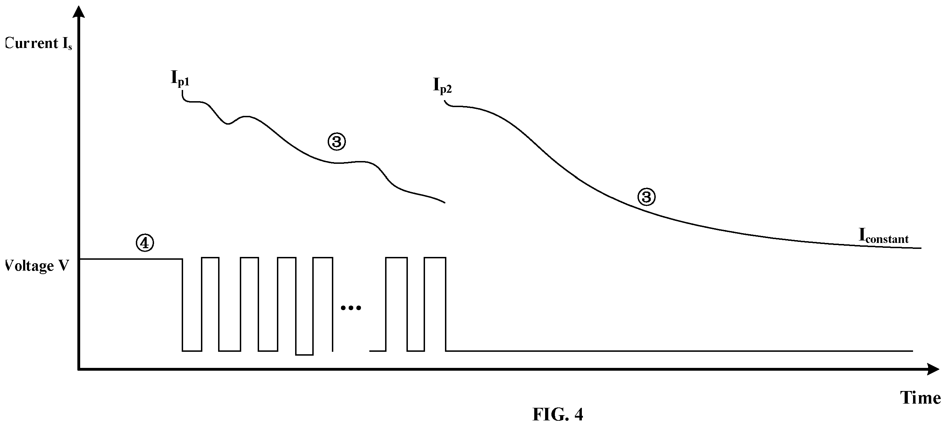

FIG. 4 exemplarily illustrates the relationship of a start-up current over time in the circuit shown in FIG. 2 under the DC motor start-up mode according to some embodiments, wherein the horizontal axis represents time, and the vertical axis represents the magnitude of the start-up current Is measured at the positive terminal of the DC motor and the magnitude of the voltage V measured at the negative terminal of the DC motor. In particular, in FIG. 4, ③ represents a curve of variation of the start-up current Is of the DC motor 11 over time, and ④ represents a curve of variation of the voltage V over time.

Referring to FIG. 4, unlike the start-up mode shown in FIG. 3, in a predetermined time interval Tₛ, the control signal applied to the gate G is provided in the form of a PWM signal, so that the switching element 110 or the MOS tube T1 periodically switches between an ON state and an OFF state. Accordingly, the voltage V periodically switches between a high potential and a low potential, and the start-up current Iₛ exhibits a peak value Iₚ₁ at the start of the time interval Tₛ and gradually decreases in a wave-like manner over time. After the time interval Tₛ ends, the control signal applied to the gate G is kept at a high level, and the switching element maintains the ON state. Correspondingly, the voltage V is kept at a low level, and the start-up current Is jumps to another peak value Iₚ₂ when the switching element begins to maintain the ON state, and gradually decreases over time until it reaches or approaches a constant current value I_{constant}. Upon comparison of FIGS. 3 and 4, it is evident that the peak start-up currents Iₚ₁ and Iₚ₂ in FIG. 4 are smaller than the peak start-up current Iₚ in FIG. 3. That is, the peak start-up current flowing through the DC motor can be reduced by causing the switching element to periodically switch between an ON state and an OFF state.

The inventors have found, after in-depth research, that by selecting the frequency of the PWM signal applied to the gate G, the peak start-up currents Iₚ₁ and Iₚ₂ can be reduced to desired levels. In particular, the peak start-up currents Iₚ₁ and Iₚ₂ decrease as the frequency of the PWM signal increases.

The inventors have also found, after in-depth research, that contrary to intuitive understanding, when the control terminal of the switching element is applied with a PWM signal, the peak start-up current Iₚ₁ is not always greater than the peak value Iₚ₂. In other words, merely controlling the peak start-up current Iₚ₁ below the desired level does not ensure that the peak value of the start-up current is below the desired level. This implies that in order to reduce the peak start-up current, it is necessary to choose a higher PWM signal frequency, thus facing more challenges in terms of costs and circuit design.

Upon further research, the inventors have found that by making the predetermined time interval Tₛ sufficiently large, the peak value Iₚ₁ could be greater than the peak value Iₚ₂.

Based on the above findings, in some embodiments, the start-up current of the DC motor can be reduced through the following means: first, lowering the peak start-up current Iₚ₁ to the desired level by selecting the frequency of the PWM signal applied to the gate G; then, ensuring that the peak value Iₚ₁ is greater than the peak value Iₚ₂ by choosing the predetermined time interval Tₛ. In this way, it is possible to circumvent such issues as increased costs and rise in complexity of circuit design resulted from using a higher PWM signal frequency.

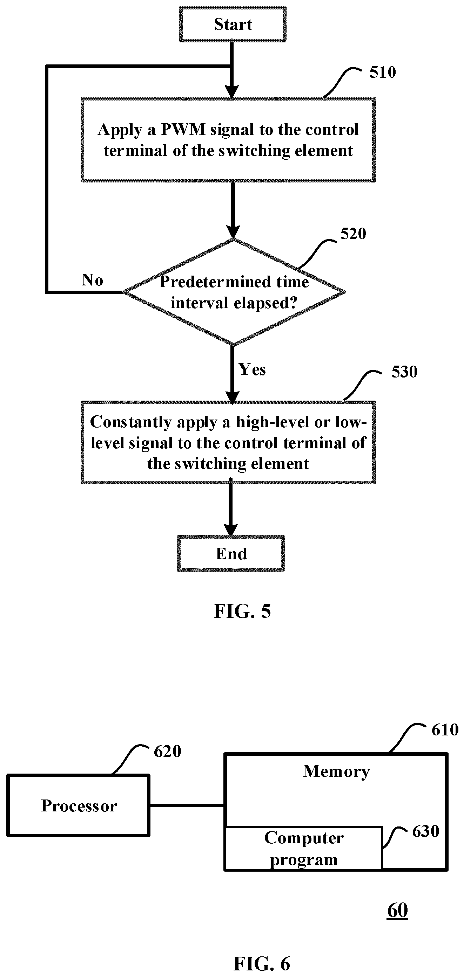

FIG. 5 shows a flow diagram of a method for reducing DC motor start-up current according to some other embodiments. Exemplarily, the method described hereinafter is implemented by means of the start-up device shown in FIG. 1 or FIG. 2.

The method illustrated by FIG. 5 includes the following steps:
Step 510: The control unit 120 causes the switching element 110 to periodically switch between an ON state and an OFF state by applying a PWM signal to the control terminal (e.g. the gate G) of the switching element 110.
Step 520: The control unit 120 determines whether a predetermined time interval Tₛ has elapsed since the application of the PWM signal; if the time interval Tₛ has elapsed, the process proceeds to step 530; otherwise, it returns to step 510.
Step 530: The control unit 120 causes the switching element 110 to maintain the ON state, for example, by constantly applying a high-level signal (in the event of the switching element being a NMOS tube) or a low-level signal (in the event of the switching element being a PMOS tube) to the control terminal (e.g. the gate G) of the switching element 110.

Optionally, the frequency of the PWM signal is set such that the value of the start-up current at the start of the time interval Tₛ is less than a first threshold value TH1.

Further optionally, the length of the predetermined time interval Tₛ is set to be greater than a second threshold value TH2, so that the value of the start-up current at the start of the predetermined time interval Tₛ (peak value Iₚ₁) is greater than the value when the switching element begins to maintain the ON state (peak value Iₚ₂).

FIG. 6 shows a schematic block diagram of a typical control device. The control device shown in FIG. 6 can be used for implementing the control unit shown in FIGS. 1 and 2.

As illustrated in FIG. 6, the control device 60 includes a memory 610 (for example, a non-volatile memory such as flash memory, ROM, hard drive, magnetic disk and optical disk), a processor 620, and a computer program 630.

The memory 610 stores the computer program 630. The processor 320 is configured to execute the computer program 630 stored on the memory 610 to implement one or more steps included in the method illustrated by FIG. 5.

There is also provided a computer-readable storage medium, with a computer program stored thereon (e.g. the computer program 630 in FIG. 6). The program, when executed by a processor (e.g. the processor 620 in FIG. 6), can implement the one or more steps in the method illustrated by FIG. 5.

The computer-readable storage medium as referred to herein includes various types of computer storage media, which may be any usable medium accessible by a general-purpose or specialized computer. For example, the computer-readable storage medium may include RAM, ROM, EPROM, E2PROM, register, hard disk, removable disk, CD-ROM or other optical disk memory, disk memory or other magnetic storage device, or any other temporary or non-temporary medium capable of carrying or storing desired program code units in the form of instructions or data structures and also capable of being accessed by a general-purpose or specific-purpose computer or processor. The combination of the above should also be included within the scope of protection of the computer-readable storage medium. An exemplary storage medium is coupled to a processor to enable the processor to read and write information from/to the storage medium. In alternative solutions, the storage medium may be integrated into the processor. The processor and the storage medium may reside in an ASIC. The ASIC may reside in a user terminal. In alternative solutions, the processor and the storage medium may reside as separate components within the user terminal.

## Claims

1. A start-up device (10) for a DC motor, comprising:
a switching element (110, T1) for connection in series within a circuit comprising the DC motor (12) and a DC power supply (11); and
a control unit (120) configured to cause the switching element to periodically switch between an ON state and an OFF state in a predetermined time interval (Ts) to reduce a peak value of a start-up current (Ip) flowing through the DC motor, and to cause the switching element to maintain the ON state after the predetermined time interval ends;
wherein the switching element is a metal-oxide-semiconductor field-effect transistor with a gate (G) thereof coupled to the control unit, one of a source (S) and a drain (D) thereof for coupling to the positive or negative terminal of the DC motor, and the other coupled to ground;
wherein the control unit is configured to cause the switching element to periodically switch between the ON state and the OFF state by applying a pulse width modulation signal to the gate; and
wherein the pulse width modulation signal is set such that a value of the start-up current at the start of the predetermined time interval is smaller than a first threshold value (TH1);
**characterised in that** a length of the predetermined time interval is set to be greater than a second threshold value (TH2), so that the value of the start-up current at the start of the predetermined time interval is greater than a value when the switching element begins to maintain the ON state.

2. A start-up device according to claim 1, further comprising an overcurrent protection component (F) for coupling between the DC power supply and the DC motor.

3. A start-up device according to claim 1 or 2, further comprising a capacitor (C) for connection between positive and negative terminals of the DC motor to absorb electromagnetic pulse components generated by the DC motor.

4. A motor system, comprising:
a DC motor (12), comprising positive and negative terminals; and
a start-up device according to any preceding claim, wherein the switching element is connected in series within a circuit comprising the DC motor and a DC power supply (11).

5. A method for reducing DC motor start-up current, comprising:
causing a switching element (110, T1) connected in series within a circuit comprising the DC motor (12) and a DC power supply (11) to periodically switch between an ON state and an OFF state in a predetermined time interval (Ts) to reduce a peak value of a start-up current (Ip) flowing through the DC motor; and
causing the switching element to maintain the ON state after the predetermined time interval ends;
wherein the switching element is implemented using a metal-oxide-semiconductor field-effect transistor;
wherein the switching element periodically switches between the ON state and the OFF state by applying a pulse width modulation signal to a gate (G) of the metal-oxide-semiconductor field-effect transistor; and
wherein the pulse width modulation signal is set such that a value of the start-up current at the start of the predetermined time interval is smaller than a first threshold value (TH1);
the method **characterised in that** a length of the predetermined time interval is set to be greater than a second threshold value (TH2), so that the value of the start-up current at the start of the predetermined time interval is greater than a value when the switching element begins to maintain the ON state.

6. A computer-readable storage medium, with instructions (630) stored thereon, wherein the instructions, when executed by a processor (620), enable the processor to perform a method according to claim 5.

## Patentansprüche

1. Anlaufvorrichtung (10) für einen Gleichstrommotor, umfassend:
ein Schaltelement (110, T1) für eine Reihenschaltung in einer Schaltung, umfassend den Gleichstrommotor (12) und eine Gleichstromversorgung (11); und
eine Steuereinheit (120), die dazu konfiguriert ist, das Schaltelement zu veranlassen, periodisch zwischen einem EIN-Zustand und einem AUS-Zustand in einem vorbestimmten Zeitintervall (Ts) umzuschalten, um einen Spitzenwert eines Anlaufstroms (Ip), der durch den Gleichstrommotor fließt, zu reduzieren, und das Schaltelement zu veranlassen, nach Ablauf des vorbestimmten Zeitintervalls den EIN-Zustand beizubehalten;
wobei das Schaltelement ein Metall-Oxid-Halbleiter-Feldeffekttransistor ist, dessen Gate (G) mit der Steuereinheit gekoppelt ist, dessen eines aus Source (S) und Drain (D) zum Koppeln mit dem positiven oder negativen Anschluss des Gleichstrommotors ist und das andere mit Masse verbunden ist;
wobei die Steuereinheit dazu konfiguriert ist, das Schaltelement zu veranlassen, durch Anlegen eines Pulsweitenmodulationssignals an das Gate periodisch zwischen dem EIN-Zustand und dem AUS-Zustand umzuschalten; und
wobei das Pulsweitenmodulationssignal derart eingestellt ist, dass ein Wert des Anlaufstroms zu Beginn des vorbestimmten Zeitintervalls kleiner als ein erster Schwellenwert (TH1) ist;
**dadurch gekennzeichnet, dass** eine Länge des vorbestimmten Zeitintervalls größer als ein zweiter Schwellenwert (TH2) eingestellt ist, so dass der Wert des Anlaufstroms zu Beginn des vorbestimmten Zeitintervalls größer ist als ein Wert, bei dem das Schaltelement beginnt, den EIN-Zustand beizubehalten.

2. Anlaufvorrichtung nach Anspruch 1, ferner umfassend eine Überstromschutzkomponente (F) zum Koppeln zwischen der Gleichstromversorgung und dem Gleichstrommotor.

3. Anlaufvorrichtung nach Anspruch 1 oder 2, ferner umfassend einen Kondensator (C) zum Verbinden zwischen dem positiven und dem negativen Anschluss des Gleichstrommotors, um die vom Gleichstrommotor erzeugten Komponenten des elektromagnetischen Impulses zu absorbieren.

4. Motorsystem, umfassend:
einen Gleichstrommotor (12), umfassend einen positiven und einen negativen Anschluss; und
eine Anlaufvorrichtung nach einem der vorhergehenden Ansprüche, wobei das Schaltelement in Reihe in einer Schaltung geschaltet ist, die den Gleichstrommotor und eine Gleichstromversorgung (11) umfasst.

5. Verfahren zum Reduzieren des Anlaufstroms eines Gleichstrommotors, umfassend:
Veranlassen eines Schaltelements (110, T1), geschaltet in Reihe in einer Schaltung, umfassend den Gleichstrommotor (12) und eine Gleichstromversorgung (11), dazu, periodisch in einem vorbestimmten Zeitintervall (Ts) zwischen einem EIN-Zustand und einem AUS-Zustand umzuschalten, um einen Spitzenwert eines Anlaufstroms (Ip), der durch den Gleichstrommotor fließt, zu reduzieren; und
Veranlassen, dass das Schaltelement nach Ablauf des vorbestimmten Zeitintervalls den EIN-Zustand beibehält;
wobei das Schaltelement mittels eines Metall-Oxid-Halbleiter-Feldeffekttransistors implementiert wird;
wobei das Schaltelement periodisch zwischen dem EIN-Zustand und dem AUS-Zustand umschaltet, indem ein Pulsweitenmodulationssignal an ein Gate (G) des Metall-Oxid-Halbleiter-Feldeffekttransistors angelegt wird; und
wobei das Pulsweitenmodulationssignal derart eingestellt ist, dass ein Wert des Anlaufstroms zu Beginn des vorbestimmten Zeitintervalls kleiner als ein erster Schwellenwert (TH1) ist;
wobei das Verfahren **dadurch gekennzeichnet ist, dass** eine Länge des vorbestimmten Zeitintervalls größer als ein zweiter Schwellenwert (TH2) eingestellt ist, so dass der Wert des Anlaufstroms zu Beginn des vorbestimmten Zeitintervalls größer ist als ein Wert, bei dem das Schaltelement beginnt, den EIN-Zustand beizubehalten.

6. Computerlesbares Speichermedium mit Anweisungen (630), die darauf gespeichert sind, wobei die Anweisungen, wenn sie von einem Prozessor (620) ausgeführt werden, es dem Prozessor ermöglichen, ein Verfahren nach Anspruch 5 durchzuführen.

## Revendications

1. Dispositif de démarrage (10) pour un moteur à courant continu, comprenant :
un élément de commutation (110, T1) destiné à être connecté en série au sein d'un circuit comprenant le moteur à courant continu (12) et une alimentation en puissance à courant continu (11) ; et
une unité de commande (120) configurée pour amener l'élément de commutation à commuter périodiquement entre un état MARCHE et un état ARRÊT dans un intervalle de temps prédéterminé (Ts) pour réduire une valeur de crête d'un courant de démarrage (Ip) circulant à travers le moteur à courant continu, et pour amener l'élément de commutation à maintenir l'état MARCHE après la fin de l'intervalle de temps prédéterminé ;
dans lequel l'élément de commutation est un transistor à effet de champ métal-oxyde-semi-conducteur avec une grille (G) de celui-ci couplée à l'unité de commande, l'un d'une source (S) et d'un drain (D) ce celui-ci étant destiné au couplage à la borne positive ou négative du moteur à courant continu, et l'autre étant couplé à la masse ;
dans lequel l'unité de commande est configurée pour amener l'élément de commutation à basculer périodiquement entre l'état MARCHE et l'état ARRÊT en appliquant un signal de modulation de largeur d'impulsion à la grille ; et
dans lequel le signal de modulation de largeur d'impulsion est réglé de telle sorte qu'une valeur du courant de démarrage au début de l'intervalle de temps prédéterminé est inférieure à une première valeur seuil (TH1) ;
**caractérisé en ce qu'**une longueur de l'intervalle de temps prédéterminé est réglée pour être supérieure à une seconde valeur seuil (TH2), de sorte que la valeur du courant de démarrage au début de l'intervalle de temps prédéterminé est supérieure à une valeur lorsque l'élément de commutation commence à maintenir l'état MARCHE.

2. Dispositif de démarrage selon la revendication 1, comprenant en outre un composant de protection contre les surintensités (F) pour le couplage entre l'alimentation en puissance à courant continu et le moteur à courant continu.

3. Dispositif de démarrage selon la revendication 1 ou 2, comprenant en outre un condensateur (C) destiné à être connecté entre des bornes positive et négative du moteur à courant continu pour absorber les composantes d'impulsion électromagnétique générées par le moteur à courant continu.

4. Système de moteur, comprenant :
un moteur à courant continu (12), comprenant des bornes positives et négatives ; et
un dispositif de démarrage selon une quelconque revendication précédente, dans lequel l'élément de commutation est connecté en série au sein d'un circuit comprenant le moteur à courant continu et une alimentation en puissance à courant continu (11).

5. Procédé de réduction du courant de démarrage d'un moteur à courant continu, comprenant :
le fait d'amener un élément de commutation (110, T1) connecté en série au sein d'un circuit comprenant le moteur à courant continu (12) et une alimentation en puissance à courant continu (11) à commuter périodiquement entre un état MARCHE et un état ARRÊT dans un intervalle de temps prédéterminé (Ts) pour réduire une valeur de crête d'un courant de démarrage (Ip) circulant dans le moteur à courant continu ; et
le fait d'amener l'élément de commutation de maintenir l'état MARCHE après la fin de l'intervalle de temps prédéterminé ;
dans lequel l'élément de commutation est mis en œuvre à l'aide d'un transistor à effet de champ métal-oxyde-semi-conducteur ;
dans lequel l'élément de commutation commute périodiquement entre l'état MARCHE et l'état ARRÊT en appliquant un signal de modulation de largeur d'impulsion à une grille (G) du transistor à effet de champ métal-oxyde-semi-conducteur ; et
dans lequel le signal de modulation de largeur d'impulsion est réglé de telle sorte qu'une valeur du courant de démarrage au début de l'intervalle de temps prédéterminé est inférieure à une première valeur seuil (TH1) ;
le procédé étant **caractérisé en ce qu'**une longueur de l'intervalle de temps prédéterminé est réglée pour être supérieure à une seconde valeur seuil (TH2), de sorte que la valeur du courant de démarrage au début de l'intervalle de temps prédéterminé est supérieure à une valeur lorsque l'élément de commutation commence à maintenir l'état MARCHE.

6. Support de stockage lisible par ordinateur, avec des instructions (630) stockées dessus, dans lequel les instructions, lorsqu'elles sont exécutées par un processeur (620), permettent au processeur de réaliser un procédé selon la revendication 5.
